(19) Europäisches Patentamt
European Patent Office
Office européen des brevets

(11) Veröffentlichungsnummer: **0 069 222**
**B1**

(12) # EUROPÄISCHE PATENTSCHRIFT

(45) Veröffentlichungstag der Patentschrift: **10.08.88**

(51) Int. Cl.[4]: **B 01 D 59/12**

(21) Anmeldenummer: **82104296.7**

(22) Anmeldetag: **17.05.82**

(54) **Verfahren zum Abtrennen von Wasserstoff und/oder Deuterium und Tritium aus einem Inertgasstrom sowie Vorrichtung zur Durchführung des Verfahrens im Kühlgaskreislauf eines gasgekühlten Kernreaktors.**

(30) Priorität: **27.05.81 DE 3121125**

(43) Veröffentlichungstag der Anmeldung: **12.01.83 Patentblatt 83/2**

(45) Bekanntmachung des Hinweises auf die Patenterteilung: **10.08.88 Patentblatt 88/32**

(84) Benannte Vertragsstaaten: **FR GB**

(56) Entgegenhaltungen:
**EP-A-0 014 077**
**DE-A-2 434 876**
**DE-A-2 548 734**
**DE-A-2 557 906**
**FR-A-1 470 361**

(73) Patentinhaber: **Kernforschungsanlage Jülich Gesellschaft mit beschränkter Haftung, Postfach 1913, D-5170 Jülich 1 (DE)**

(72) Erfinder: **Iniotakis, Nicolaos, Kopernikusstrasse 64, D-5170 Jülich (DE)**
Erfinder: **Von der Decken, Claus- Benedict, Prof., Dammstrasse 37, D-5100 Aachen (DE)**
Erfinder: **Hecker, Rudolf, Prof., Weissdornweg 4, D-5170 Jülich (DE)**
Erfinder: **Fröhling, Werner, Dr., Keltenstrasse 38, D-5160 Düren (DE)**
Erfinder: **Schulten, Rudolf, Prof., Karl- Friedrich-strasse 4, D-5100 Aachen- Richterich (DE)**

EP 0 069 222 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Die Erfindung bezieht sich auf ein Verfahren zum Abtrennen von Wasserstoff und/oder Deuterium und Tritium aus einem Inertgasstrom, der mit Wasserstoff und/oder Deuterium und Tritium verunreinigt ist, bei dem das zu reinigende Inertgas primärseitig an einer Austauschwand einer Permeationskammer für Wasserstoffisotope entlanggeführt wird, wobei die Wasserstoffisotope durch die Austauschwand permeieren, und auf der Sekundärseite der Austauschwand ein Trägergasstrom zum Abtransport der Wasserstoffisotope strömt, und die abzutrennenden Wasserstoffisotope in einem durch die Austauschwand nicht permeationsfähigen, im Trägergasstrom transportablen Reaktionsprodukt durch Zugabe eines reagiernden Stoffes gebunden werden. Die Erfindung bezieht sich auch auf eine Vorrichtung zur Durchführung des Verfahrens im Kühlgaskreislauf eines gasgekühlten Kernreaktors.

Wasserstoff, (H), und seine Isotope, Deuterium, (D), und Tritium, (T), treten als Verunreinigungen, beispielsweise in Kühlgaskreisläufen gasgekühlter Kernreaktoren auf, wobei Inertgase, insbesondere Helium als Kühlgase verwendet werden. So entsteht beispielsweise im Reaktorcore eines Hochtemperaturreaktors (HTR) mit einer Leistung von 500 $MW_{th}$ eine Tritiummenge von ca. $10 \cdot 10^3$ Ci pro Jahr. Das Tritium wird in bekannter Weise in einer Gasreinigungsanlage entfernt, die am Kühlgaskreislauf angeschlossen ist und die von einem Teil des Kühlgases durchströmt wird, wobei sich im Kühlgaskreislauf ein Gleichgewichtspartialdruck für Tritium zwischen 0,01 bis 0,1 µbar einstellt. Für Wasser beträgt der Gleichgewichtsdruck im Kühlgaskreis auf etwa 2 µbar und für Wasserstoff zwischen $10^2$ bis $10^3$ µbar. Wegen des Überschusses von Wasserstoff gegenüber Wasser und Tritium im Kühlgaskreislauf liegt Tritium aufgrund von Isotopenaustausch im Kühlgasstrom im wesentlichen als Wasserstoff- Tritium- Molekel vor. Das radioaktive Tritium im Kühlgaskreislauf gelangt mit dem Kühlgasstrom zu den Komponenten des Kernreaktors, deren Wände es infolge Permeation durchdringen kann. Um hierdurch bedingte Umweltbelastungen zu vermeiden, wird eine möglichst geringe Tritiumkonzentration im Kühlgaskreislauf angestrebt.

Bekannt ist es, den Gleichgewichtspartialdruck für Tritium, Wasser und Wasserstoff durch Reinigung eines Teils des Kühlgasstroms abzusenken. Der abgezweigte Teil des Kühlgasstroms wird in einem Bypaß zum Kühlgaskreislauf durch eine Gasreinigungsanlage geleitet. In der Gasreinigungsanlage wird das Wasser in Form von $H_2O$, HDO bzw. HTO, der Wasserstoff in Form von $H_2$, HD bzw. HT quantitativ entfernt. Dabei wird der Kühlgasstrom beispielsweise über ein gekühltes Kupferoxid (CuO)-Bett geleitet, wobei Wasserstoff, Deuterium und Tritium oxidiert und kondensiert werden. Nachteilig ist bei diesem Reinigungsverfahren, daß nur ein Teilgasstrom in der Größenordnung von Promille und weniger des gesamten Kühlgasstroms pro Kühlgasumlauf gereinigt werden kann und somit ein befriedigend niedriger Partialdruck für Tritium im Kühlgaskreislauf nicht erreicht wird.

Zur Abtrennung von Tritium ist aus US-A-3 848 067 ein Filter bekannt, bei dem Yttrium, das ein hohes Rückhaltevermögen für die Wasserstoffisotope aufweist, als Wasserstoffspeicher benutzt wird. Zur Abtrennung der Wasserstoffisotope aus dem Kühlgaskreislauf mit Yttrium wird der Kühlgasstrom an der Oberfläche nickelbeschichteten Yttriums entlanggeführt, wobei die Wasserstoffisotope durch die Nickelbeschichtung permeieren und im Yttrium im wesentlichen in Form von Metallhydriden gespeichert werden. Nach Anreicherung der Wasserstoffisotope im Yttrium muß der Filter ausgetauscht werden. Nachteilig ist, daß die Filterwirkung mit zunehmender Wasserstoffanreicherung im Yttrium nachläßt und der Filter je nach den Partialdruckverhältnissen der aus dem Inertgasstrom abzutrennenden Wasserstoffe schon in kurzer Zeit unwirksam werden kann.

Des weiteren ist es aus FR-A-1 470 361 bekannt, Kohlendioxid, das mit Methan versetzt ist und auch Wasserstoff enthält, zur Abtrennung von Wasserstoff durch permeable Diffusionsrohre zu leiten. Die Permeation des Wasserstoffes wird durch Evakuieren oder mittels eines Gasstroms erreicht, der auf der Sekundärseite der Diffusionsrohre strömt und als Transportmittel für den diffundierten Wasserstoff dient. Der abtransportierte Wasserstoff wird in einer gesonderten Reaktionskammer katalytisch oxidiert. Nachteilig ist, daß das für die Wasserstoffpermeation erwünschte hohe Partialdruckgefälle eine hohe Gesamtdruckdifferenz voraussetzt und daß an der Sekundärseite ein hoher Volumenstrom erforderlich ist, um auch am Ende der Permeationswand die notwendige Partialdruckdifferenz aufrechterhalten zu können.

Aufgabe der Erfindung ist es, ein Verfahren zum Abtrennen von Wasserstoff und/oder Deuterium und Tritium aus einem Inertgasstrom zu schaffen, das eine kontinuierliche Gasreinigung mit während der Betriebszeit weitgehend gleichbleibendem Reinigungsgrad unter Verwendung einer für die Wasserstoffisotope permeablen Austauschwand ermöglicht, wobei mit einer geringen Gesamtdruckdifferenz zwischen beiden Seiten der Austauschwand und mit einem geringen Volumenstrom auszukommen ist.

Diese Aufgabe wird bei einem Verfahren der eingangs genannten Art gemäß der Erfindung durch die im Patentanspruch 1 angegebenen

Maßnahmen gelöst. Das für die Permeation der Wasserstoffisotope erforderliche Konzentrationsgefälle zwischen Primär- und Sekundärseite der Austauschwand wird durch chemische Bindung des zu entfernenden Wasserstoffisotops dadurch erreicht, daß auf der Sekundärseite der Austauschwand ein mit den Wasserstoffisotopen chemisch reagierender Stoff zugegeben wird, daß das aus dem zu reinigendem Inertgasstrom abzutrennende Wasserstoffisotop oder die Isotope bereits auf der Sekundärseite der Austauschwand als nicht permeationsfähiges Reaktionsprodukt gebunden werden. Das Reaktionsprodukt wird dann vom sekundärseitig der Austauschwand geführten Trägergasstrom aufgenommen und abgeführt. Für den Transport des Reaktionsproduktes mit dem Trägergas genügt ein Volumendurchsatz in der Größenordnung von Promille bezogen auf den Volumendurchsatz des zu reinigenden Inertgasstroms. Ein weiterer Vorteil des erfindungsgemäßen Verfahrens besteht darin, daß Druck und Temperatur des Trägergasstroms auf der Sekundärseite der Austauschwand dem vorhandenen Druck und der Temperatur des zu reinigenden Inertgases auf der Primärseite anpaßbar sind.

Um eine selektive Trennung der Wasserstoffisotope zu erreichen, wird dem Trägergas ein Stoff zugegeben, der die abzutrennenden Wasserstoffisotope durch Isotopenaustausch bindet. Für die selektive Trennung von Tritium und Deuterium aus einem durch die Austauschwand permeierten Wasserstoff/Deuterium/Tritium-Gemisch ist vor allem Wasser bzw. Wasserdampf geeignet. Der auf der Sekundärseite der Austauschwand für den Isotopenaustausch zugegebene Stoff enthält also überwiegend nicht abzutrennende Wasserstoffisotope, so daß für diese im Gegensatz zu den zu bindenden Wasserstoffisotopen ein Konzentrationsgleichgewicht auf beiden Seiten der Austauschwand besteht. Für den Isotopenaustausch läßt sich neben oder statt bevorzugt verwendetem Wasser auch Ammoniak, $NH_3$, oder Schwefelwasserstoff, $H_2S$, einsetzen.

Bei Zugabe von Wasser bildet sich beispielsweise aus HT und HD gemäß den Reaktionen

$HT + H_2O \rightleftarrows HTO + H_2$,

$HD + H_2O \rightleftarrows HDO + H_2$,

HTO und HDO, wobei durch Erhöhung des $H_2O$-Partialdruckes im Trägergas der Übergang von HT in HTO und HD in HDO begünstigt wird. Durch Veränderung der auf der Sekundärseite der Austauschwand durchgesetzten Menge des Stoffes für den Isotopenaustausch, also beispielsweise durch Erhöhen der zugegebenen Wassermenge, wird das Gleichgewicht der Reaktion zur rechten Seite der Reaktionsgleichung verschoben. Durch die Zugabe von Wasser beziehungsweise Wasserdampf in den Trägergasstrom, wird infolge des Isotopenaustausches der Konzentrationsgradient zwischen Primär- und Sekundärseite hinsichtlich der permeationsfähigen HT- beziehungsweise HD-Molekel auch bei relativ zum Volumendurchsatz auf der Primärseite kleinem Volumendurchsatz des Trägergases erreicht. Es genügt ein Volumendurchsatz für das Trägergas im Promille-Bereich bezogen auf den Volumendurchsatz auf der Primärseite. $H_2$ ist sowohl primär- als auch sekundärseitig der Austauschwand mit gleichem Partialdruck im Gas enthalten. Es wird somit aus dem Inertgasstrom auf der Primärseite nicht entfernt. Die auf der rechten Seite der oben angegebenen Gleichungen aufgeführten Reaktionsprodukte werden vom Trägergas von der Sekundärseite der Austauschwand weggeführt. Aus dem Trägergas wird dann anschließend dasjenige Reaktionsprodukt, das das abzutrennende Wasserstoffisotop oder die abzutrennenden Isotope bindet, beispielsweise durch Kondensation abgeschieden, wobei überschüssiger für den Isotopenaustausch zugegebener Stoff zugleich entfernt wird. In vorteilhafter Weise läßt sich somit bei gasgekühlten Kernreaktoren nicht nur ein Teil, sondern der gesamte Kühlgasstrom pro Umlauf selektiv von Tritium und Deuterium reinigen.

Zur Aufrechterhaltung des Konzentrationsgefälles zwischen Primär- und Sekundärseite der Austauschwand läßt sich dem Trägergasstrom auch ein die Wasserstoffisotope oxidierender Stoff zuführen. Bei Zugabe von solchen Stoffen wird bei Reaktion mit den Wasserstoffisotopen $H_2O$, $D_2O$, $T_2O$ sowie HDO und HTO gebildet, die in gleicher Weise wie beim vorbeschriebenen Isotopenaustausch vom Trägergasstrom abgeführt werden und sich beispielsweise durch Kondensation oder Rektifikation aus dem Trägergasstrom wieder abscheiden lassen. Zur Oxidation der Wasserstoffisotope wird bevorzugt Sauerstoff oder alternativ dazu Metalloxid, insbesondere Kupfer- oder Eisenoxid auf der Sekundärseite der Austauschwand eingesetzt. Bei Verwendung von Metalloxid wird auf der Sekundärseite zweckmäßig ein Metalloxidbett ausgebildet, durch das der Trägergasstrom zum Abführen der gebildeten Reaktionsprodukte hindurchgeleitet wird.

Weitere Ausbildungen des erfindungsgemäßen Verfahrens werden in Patentansprüchen 8 bis 14 angegeben. Danach werden der zu reinigende Inertgasstrom auf der Primärseite der Austauschwand und der Trägergasstrom auf der Sekundärseite der Austauschwand im Gegenstrom geführt, um einen hohen Reinigungsgrad des Inertgasstroms zu erreichen. Zweckmäßig wird der Trägergasstrom nach Abscheidung der vom Trägergas mitgeführten Reaktionsprodukte und - gegebenenfalls nach erneuter Zugabe des mit den Wasserstoffisotopen reagierenden Stoffes - im Kreislauf zur Sekundärseite der Austauschwand zurückgeführt. Bevorzugt wird als Trägergas gereinigtes Inertgas verwendet. Das Trägergas

läßt sich für diesen Fall in vorteilhafter Weise aus dem primärseitig der Austauschwand abströmenden gereinigten Inertgasstrom entnehmen. Es wird ein Teil des gereinigten Inertgases abgezogen und unter Zugabe eines mit den Wasserstoffisotopen reagierenden Stoffes zur Sekundärseite der Austauschfläche geführt. Es wird auf diese Weise zugleich ein Druckausgleich - bis auf einen geringen Unterdruck, der im wesentlichen dem Druckverlust entspricht, der auf der Primärseite der Austauschwand beim Durchströmen des Inertgases durch die Austauscheinrichtung entsteht - und ein Temperaturausgleich zwischen Primär- und Sekundärseite der Austauschwand erreicht. Darüberhinaus entfallen bei Rückführung des Trägergasstromes nach Abscheidung der Reaktionsprodukte in den gereinigten Inertgasstrom für die Aufrechterhaltung des Trägergasstroms sonst erforderliche Strömungsaggregate. Der mit den Wasserstoffisotopen reagierende Stoff wird dem abgezweigten Teilstrom des Inertgases so rechtzeitig zugeführt, daß beim Einlauf des Trägergasstroms zur Sekundärseite der Austauschwand ein Konzentrationsgefälle zum Inertgasstrom auf der Primärseite der Austauschwand vorhanden ist. Vorteilhaft ist es, den Trägergasstrom nach Zugabe des mit den Wasserstoffisotopen reagierendes Stoffes vor Durchströmen der Sekundärseite der Austauschwand über einen die Reaktion zwischen zugegebenem Stoff und Wasserstoffisotopen beschleunigenden Katalysator zuleiten. Um das erforderliche Konzentrationsgefälle zu erzeugen, läßt sich der vom gereinigten Inertgas als Trägergas abgezweigte Teilstrom vor Eintritt auf der Sekundärseite der Austauschwand auch über ein Metalloxid-Bett, insbesondere ein Kupferoxid- oder Eisenoxid-Bett führen, wobei gegebenenfalls vor Eintritt auf der Sekundärseite noch der mit den permeierten Wasserstoffisotopen reagierende Stoff zuzugeben ist.

In weiterer Ausgestaltung der Erfindung wird der zu reinigende Inertgasstrom nacheinander durch zwei Permeationskammern geführt, wobei auf der Sekundärseite der einen Permationskammer ein Stoff für den Isotopenaustausch, auf der Sekundärseite der anderen Permantionskammer ein die Wassestoffisotope oxidierender Stoff zugegeben wird. Mit dieser Maßnahme sind sowohl das Partialdruckverhältnis der Wasserstoffisotope zueinander durch selektives Abtrennen beim Isotopenaustausch - beispielsweise bei Zuführung von Wasser oder Wasserdampf durch Abtrennen von Deuterium und Tritium - als auch der absolute Partialdruck des Wasserstoffs durch Oxidation der permeierten Wasserstoffisotope steuerbar. Bevorzugt durchströmt das zu reinigende Inertgas zunächst eine Permeationskammer, auf deren Sekundärseite dem Trägergasstrom Sauerstoff zugeführt wird und danach eine Permeationskammer, auf deren Sekundärseite dem Trägergas ein Stoff für den Isotopenaustausch zugegeben wird. Dabei läßt sich das Trägergas durch die Permeationskammern in Gegenrichtung zum zu reinigenden Inertgasstrom führen.

Wird als die Wasserstoffisotope oxidierender Stoff auf der Sekundärseite einer Permeationskammer ein Metalloxid, zum Beispiel Kupferoxid verwendet, ist es zweckmäßig, aus dem Inertgasstrom die Wasserstoffisotope zunächst durch Isotopenaustausch und danach bei Durchströmen einer nachfolgenden Permeationskammer durch Oxidation abzutrennen. In diesem Falle läßt sich das auf der Sekundärseite der zweiten Permeationskammer gebildete Wasser nachfolgend für den Isotopenaustausch auf der Sekundärseite der ersten Permeationskammer einsetzen. Ein Abtrennen der Wasserstoffisotope aus dem Inertgasstrom in zwei nacheinander durchströmten Permeationskammern, mit Isotopenaustausch und Oxidation der Wasserstoffisotope, ist auch für die Reinigung des Kühlgaskreislaufs eines gasgekühlten Kernreaktors von Bedeutung, da auf diese Weise neben der Entfernung des Tritiums aus dem Kühlgaskreislauf auch ein gewünschter $H_2$-Gehalt im Kühlgaskreislauf einstellbar ist.

Im folgenden wird das erfindungsgemäße Verfahren und eine Vorrichtung zur Durchführung des Verfahrens im Kühlgaskreislauf eines gasgekühlten Kernreaktors, bei der das erfindungsgemäße Verfahren zur Anwendung kommt und die Teil der Erfindung ist, anhand von Ausführungsbeispielen näher erläutert. Es zeigen im einzelnen:

Figur 1, Wasserstofftrennanlage mit vom zu reinigenden Inertgasstrom nacheinander zu durchströmenden Permationskammern,

Figur 2, ein weiteres Ausführungsbeispiel für eine Wasserstofftrennanlage mit nacheinander zu durchströmenden Permeationskammern,

Figur 3, Schaltschema für den Einsatz einer Wasserstofftrennanlage im Kühlgaskreislauf eines gasgekühlten Kernreaktors

Figur 1 zeigt eine Wasserstofftrennanlanlage mit zwei Permeationskammern 1, 2. Die Permeationskammern sind ähnlich wie Wärmetauscher aufgebaut. Es lassen sich beispielsweise sowohl nach Art von Rohrbündelwärmetauschern, wobei beispielsweise Wendelrohre eingesetzt sind, oder nach Art von Plattenwärmetauschern mit ebenen oder gewellten Wänden ausgebildete Apparate verwenden. Die sonst dem Wärmeaustausch dienenden Einbauten dienen in den Permeationskammern der Wasserstofftrennanlage als Austauschwände für die Permeation der Wasserstoffisotope. In der Zeichnung sind die Austauschwände lediglich schematisch dargestellt und mit Bezugsziffern 3,

4 bezeichnet. Ihrem Zweck entsprechend, bestehen die Austauschwände aus einem Material mit hoher Permeationsfähigkeit für Wasserstoff, im Ausführungsbeispiel sind die Austauschwände aus Zr ausgebildet. Als Materialien für die Austauschwände kommen jedoch insbesondere auch Nb, Ta, V, Pd, Hf, Ti sowie Legierungen dieser Metalle oder auch aneinander gefügte Metallschichten in Betracht.

Durch die zwei Permeationskammern 1, 2 wird ein zu reinigender Inertgasstrom 5 geführt, der die Permeationskammern in Strömungsräumen 6, 7 die jeweils auf der Primärseite der Austauschwände 3, 4 angeordnet sind, durchströmt. Auf der Sekundärseite der Austauschwände 3, 4 wird in den Permeationskammern im Gegenstrom zum Inertgas durch Strömungsräume 8, 9 ein Trägergasstrom 10 geführt. Im Ausführungsbeispiel besteht der Trägergasstrom aus gereinigtem Inertgas, beispielsweise aus Helium. Als Trägergas läßt sich jedoch auch ein vom zu reinigendem Trägergas verschiedenes Inertgas verwenden, bei der Reinigung von Helium beispielsweise Argon oder - falls keine Reaktionen mit der Austauschwand zu erwarten sind - auch Stickstoff, Kohlendioxid oder Gemische dieser Gase.

Im Strömungsraum 9 der Permeationskammer 2 ist im Trägergas Wasser oder Wasserdampf enthalten, der über Wasser- oder Wasserdampfleitung 11 mit Durchflußregler 11a den Trägergasstrom eingeführt wird. Das Wasser oder der Wasserdampf läßt sich jedoch mit gleicher Wirkung unmittelbar auch in den Strömungsraum 9 einbringen. Im Strömungsraum 8 der Permeationskammer 1 enthält das Trägergas Sauerstoff, der dem Trägergas über eine Sauerstoffleitung 12ᵛ mit Durchflußregler 12a zugeführt wird. Der Sauerstoff läßt sich jedoch auch unmittelbar in den Strömungsraum 8 einbringen. Die beim Durchströmen des zu reinigenden Inertgases durch die Permeationskammer 1 über die Austauschwand 3 permeierenden Wasserstoffisotope werden auf der Sekundärseite der Austauschwand 3 im Strömungsraum 8 oxidiert und vom Trägergas in Form von $H_2O$, $D_2O$ und $T_2O$ sowie HDO und HTO abgeführt. In der Permeationskammer 1 erfolgt somit eine Verringerung des Gesamtgehaltes an Wasserstoff und seiner Isotope im Inertgasstrom, wobei im Inertgasstrom ein gewünschter Partialdruck für $H_2$ eingestellt wird.

In der Permeationskammer 2 erfolgt durch Reaktion mit dem im Trägergas enthaltenden Wasser oder Wasserdampf ein Isotopenaustausch, wobei auf der Sekundärseite der Austauschwand 4 als Reaktionsprodukte $D_2O$ und $T_2O$ sowie HDO und HTO entstehen. Der Gehalt an Deuterium und Tritium im zu reinigenden Inertgas wird in der Permeationskammer 2 selektiv herabgesetzt, wobei Deuterium und Tritium aus dem Inertgasstrom quantitativ entfernt werden. Der $H_2$-Gehalt im Inertgas bleibt jedoch unverändert.

Wird in der Permeationskammer nach Figur 1 ein Heliumgasstrom von 74 kg/sec. mit etwa 50 µbar $H_2$-Partialdruck und 1 µbar HT-Partialdruck bei einer Temperatur von 300° C und einem Druck von 40 bar gereinigt, so kann im Heliumgasstrom der Partialdruck von $H_2$ um einen Faktor 4 und der Partialdruck von HT um einen Faktor von 50 herabgesetzt werden. Hierzu sind in der Permeationskammer 1 bei Verwendung von Austauschwänden aus Zirkon mit einer Wandstärke von 1 mm eine Austauschfläche von 270 $m^2$ und für die Permeationskammer 2 bei gleichem Material eine Austauschfläche von 700 $m^2$ erforderlich, wobei eine Permeationshemmung durch Oxidbildung auf den Austauschwänden berücksichtigt ist, die die bei reiner Zirkonoberfläche gegebene Permeation um den Faktor 100 verringert. Zur Reinigung des Inertgasstroms werden in der Permeationskammer 2 ca. 3 t/Jahr Wasser, in der Permeationskammer 1 ca. $3 \cdot 10^2$ KMol/Jahr Sauerstoff benötigt. Die vom Trägergasstrom mitgeführte tritierte Wassermenge beträgt ca. 13,5 t/Jahr. Dieses Wasser wird aus dem Trägergas in einem Kondensator 13 mit Kondensatablauf 13a insgesamt abgeschieden. Vom Kondensator 13 wird das Trägergas von einem Gebläse 14 abgesaugt und strömt im Kreislauf erneut zur Permeationskammer 2. Soll der Wasserstoffpartialdruck im Heliumgasstrom um den Faktor 20 verringert werden, ist unter Beibehaltung des Gasreinigungsgrades hinsichtlich Tritium und unter Beibehaltung der übrigen Betriebsparmeter die Austauschfläche der Permeationskammer 1 auf ca. 600 $m^2$ zu erhöhen und die Austauschfläche der Permeationskammer 2 auf ca. 300 $m^2$ zu verringern. Dabei wird in der Permeationskammer 1 etwa 20 % mehr sauerstoff benötigt und insgesamt ca. 20 % mehr Wasser pro Jahr produziert als bei einer Verringerung des Partialdruckes für $H_2$ nur um den Faktor 4, jedoch sind in der Permeationskammer 2 auf der Sekundärseite der Austauschwand nur noch ca. 600 kg/Jahr Wasser oder Wasserdampf zuzugeben.

Bei einer Wasserstofftrennanlage nach Figur 2 durchströmt ein Inertgasstrom 15 nacheinander zwei Permeationskammern 16, 17 mit Austauschwänden 18, 19, die in gleicher Weise wie beim Ausführungsbeispiel 1 aus Rohren oder Platten oder anderen für den Isotopenaustausch geeigneten Bauelementen ausbildbar sind und in Figur 2 lediglich schematisch dargestellt sind. Die Austauschwände bestehen wie beim Ausführungsbeispiel 1 aus Zirkon. Der Inertgasstrom strömt auf der Primärseite der Austauschwände 18, 19 in Strömungsräumen 20, 21. Auf der Sekundärseite der Austauschwand 18 befindet sich im Strömungsraum 22 im Trägergasstrom 23 Wasser- oder Wasserdampf für den Isotopenaustausch mit den durch die Austauschwand 18 permeierenden Wasserstoffisotopen, auf der Sekundärseite der Austauschwand 19 der Permeationskammer 17 ist

im Strömungsraum 24 im Kontakt mit auf der Sekundärseite der Austauschwand 19 strömenden Trägergas ein CuO-Bett 25 ausgebildet, das in Figur 2 schematisch durch Punktieren des Strömungsraums 24 angegeben ist. In der Permeationskammer 17 oxidieren die durch die Austauschwand 19 permeierten Wasserstoffisotope unter Bildung von $H_2O$, $D_2O$, $T_2O$ sowie HDO und HTO. Hiervon läßt sich das als Reaktionsprodukt im wesentlichen entstehende Wasser für den Isotopenaustausch in der Permeationskammer 16 nutzen Je nach Auslegung kann somit eine Wasserzugabe in den Strömungsraum 22 der Permeationskammer 16 entfallen. In Figur 2 ist deshalb eine zur Zufuhr von Wasser in den Trägergasstrom 21 mündende Wasser- oder Wasserdampfleitung 26 mit Durchflußregler 26a strichliniert gezeichnet, um auf diese Weise hervorzuheben, daß die Wasser- oder Wasserdampfleitung 26 nicht für jeden Fall erforderlich ist.

Das Trägergas wird bei der Wasserstofftrenneinrichtung nach Figur 2 über einen Bypaß 27 dem gereinigten Inertgasstrom entnommen, der der Austauscheinrichtung 17 in einer Reingasleitung 28 entströmt. Im Bypaß und in der Reingasleitung 28 sind Durchflußregler 27a angeordnet. Die als Trägergas entnommene Inertgasmenge liegt im Promillebereich bezogen auf das in der Reingasleitung 28 insgesamt pro Zeiteinheit strömende Inertgasvolumen. Beim Durchströmen des Strömungsraums 24 wird das im CuO-Bett 25 als Reaktionsprodukt gebildete Wasser vom Trägergas mitgeführt und somit im Inertgasstrom in gleicher Weise wie beim Ausführungsbeispiel 1 sowohl eine absolute Verringerung der Konzentration der Wasstoffisotope durch Oxidation, als auch durch selektives Abtrennen von Deuterium und Tritium in der Permeationskammer 16 eine Veränderung des Partialdruckverhältnisses der Wasserstoffisotope untereinander erreicht, wobei der Partialdruck für $H_2$ im Verhältnis zum Partialdruck der abzutrennenden Isotope zunimmt.

Der im Gegenstrom zum Inertgasstrom 15 durch die Permeationskammern 16, 17 geführte Trägergasstrom 23 wird mit Reaktionsprodukten beladen vom Strömungsraum 22 zu einem Kondensator 29 geleitet. Im Kondensator 29 wird tritiiertes Wasser als Reaktionsprodukt niedergeschlagen und über eine Kondensatleitung 30 abgeführt. Der gereinigte Trägergasstrom strömt über eine Rückführleitung 31 wieder in die Reingasleitung 28 ein und wird vom Inertgasstrom aufgenommen.

Die Entnahme von Inertgas als Trägergas aus dem gereinigten Inertgasstrom erspart den Einsatz eines Kompressors oder eines Gebläses, das beim Ausführungsbeispiel 1 das Trägergas im Kreislauf fördert. Die benötigte Druckdifferenz, die zur Aufrechterhaltung des Trägergasstroms zwischen Anschluß des Bypaßes 27 und Mündung der Rückführleitung 31 in die Reingasleitung 28 erforderlich ist, wird von den Förderaggregaten, die zur Förderung des zu reinigenden Inertgasstromes vorhanden sind, miterzeugt. Von Bedeutung ist jedoch vorallem, daß über den Bypaß 27 in einfacher Weise zwischen Primär- und Sekundärseite der Austauschwände 18, 19 innerhalb der Permeationskammern 16, 17 ein Temperatur- und Druckausgleich erreicht wird, abgesehen von geringen Druckdifferenzen, die infolge der Druckverluste beim Durchströmen des Inertgases durch die Strömungsräume 20, 21 sowie - hinsichtlich der Druckdifferenz in der Permeationskammer 17 - zusätzlich infolge des Druckverlustes auftreten, der beim Durchströmen des Trägergases durch den Strömungsraum 24 entsteht. Auf der Sekundärseite der Austauschwände 18, 19 bildet sich somit ein geringer Unterdruck gegenüber den Primärseiten der Permeationskammern 16, 17 aus.

Die Verwendung gereinigten Inertgases als Trägergas und die Entnahme von Inertgas über einen Bypaß mit Rückführung des gereinigten Trägergases in den Inertgasstrom nach Abscheidung des tritiierten Wassers aus dem Trägergas ist auch bei Ausführungsbeispiel 1 möglich. Um ein Konzentrationsgefälle zwischen Primär- und Sekundärseite der Austauschwand 4 in der Permeationskammer 2 zu erhalten, ist es dann allerdings erforderlich, das Wasser oder den Wasserdampf in das als Trägergas verwendete gereinigte Inertgas so rechtzeitig vor Eintritt des Trägergases in den Strömungsraum 9 der Permeationskammer 2 einzuspeisen, daß die HT-Konzentration im Trägergas durch Isotopenaustausch ausreichend verringert wird. Die Reaktion kann durch Zugabe eines entsprechenden Katalysators beschleunigt werden. Auch läßt sich das über den Bypaß dem gereinigten Inertgasstrom entnommene Trägergas zur Verringerung der HT-Konzentration vor der Zugabe von Wasser oder Wasserdampf über ein CuO-Bett führen.

Wird die Wasserstofftrenneinrichtung nach Figur 2 von einem Heliumgasstrom von 74kg/sec bei gleichen Betriebsbedingungen wie im Ausführungsbeispiel 1 (Gastemperatur 300° C, Gasdruck 40 bar) und bei gleichen Partialdrücken für $H_2$ und HT ($P_{H2}$= 50 µbar) $P_{HT}$=1 µbar) beschickt, so wird nach Durchströmen der Permeationskammern 16, 17 der Partialdruck von $H_2$ um einen Faktor 4, der Partialdruck von $H_2$ um einen Faktor 50 verringert. Die hierzu benötigten Austauschflächen aus Zirkon betragen bei einer Wandstärke von 1 mm für die Austauschwand 18 mit Isotopenaustausch auf der Sekundärseite ca. 1000 $m^2$, für die Austauschwand 19 mit Oxidation der Wasserstoffisotope ca. 275 $m^2$. Bei dieser Auslegung wird in gleicher Weise wie beim Ausführungsbeispiel 1 davon ausgegangen, daß die Permeation durch die Austauschwände 18, 19 infolge Oxidation um den Faktor 100 gegenüber der Permeation bei nicht oxidierter Austauschwand herabgesetzt ist. Die zur Oxidation der permeierten Wasserstoffisotope in der Permeationskammer 17 benötigte

Sauerstoffmengen wird durch Reduktion des CuO-Bettes geliefert. Unter Ausnutzung des dabei entstehenden Wassers ist zusätzlich nur noch ca. 1 to pro Jahr Wasser erforderlich. Im Kondensator 29 fallen bei der Reinigung des Trägergasstroms ca. 11,5 to pro Jahr tritiiertes Wasser an.

Soll der Wasserstoffpartialdruck im zu reinigenden Inertgas um den Faktor 20 verringert werden, so entfällt unter Beibehaltung des Gasreinigungsgrades des Inertgasstromes hinsichtlich seines Tritiumsgehaltes und unter Beibehaltung der übrigen Betriebsparameter bei einer Vergrößerung der Austauschfläche in der Permeationskammer 17 von 275 auf 600 $m^2$ die der Permeationskammer 16 zuzuführenden Wassermenge ganz. Allerdings wird gegenüber dem zuvor beschriebenen Ausführungsbeispiel für die Wasserstofftrenneinrichtung nach Figur 2 der Sauerstoffverbrauch um ca. 20 % erhöht, was zur Reduktion einer größeren CuO-Menge führt. Die Austauschfläche der Austauschwand 18 für den Isotopenaustausch in der Permeationskammer 16 bleibt unverändert.

In Figur 3 ist ein Schaltschema für einen Kühlgaskreislauf 32 eines gasgekühlten Kernreaktors 33 vom Typ HTR mit einer Gasreinigungsanlage für Tritium wiedergegeben, die im Ausführungsbeispiel aus einer Permeationskammer 34 und einer konventionellen Gasreinigungskammer 35 mit einer Einrichtung zur Abscheidung von Wasser, beispielsweise einem gekühltem CuO-Bett besteht.

Nach dem Schaltschema der Figur 3 wird das nach Erhitzen im Kernreaktor 33 abströmende Kühlgas in Strömungsrichtung 32a zunächst Reaktorkomponenten 36, 37 zugeführt, die dem Wärmeaustausch und der Energiegewinnung dienen und bei denen es sich beispielsweise um Wärmeübertrager auf Sekundärenergieträger handeln kann. Die Permeationskammer 34 ist im Kühlgaskreislauf 32 den Reaktorkomponenten 36, 37 nachgeschaltet. Die Permeationskammer 34 ist in gleicher Weise wie die Permeationskammern 2 und 16 der Ausführungsbeispiele 1 und 2 gestaltet. So strömt im Strömungsraum 38 primärseitig von einer Austauschwand 39, die aus Zirkon besteht, zu reinigendes Kühlgas des Kühlgaskreislaufs 32, im Strömungsraum 40 auf der Sekundärseite der Austauschwand 39 wird Trägergas geführt, dem Wasser oder Wasserdampf für den Isotopenaustausch mit durch die Austauschwand 39 permeierenden Wasserstoffisotopen über eine Zuführleitung 41 mit Durchflußregler 41a zugeführt wird. Als Trägergas wird wie in der Permeationskammer nach Figur 2 gereinigtes Kühlgas benutzt, das über einen Bypaß 42 mit Durchflußregler 42a aus dem Kühlgaskreislauf abgeführt wird. Die Zuführleitung 41 für Wasser bzw. Wasserdampf mündet noch vor Eintritt des Bypasses 42 in den Strömungsraum 40 des auf der Sekundärseite der Austauschwand 39 geführten Kühlgases, das den Trägergasstrom bildet, in den Bypaß 42, um so durch Reaktion zwischen zugeführtem Wasser und im Kühlgasstrom noch enthaltenem Tritium eine Partialdruckverringerung für HT im Trägergasstrom gegenüber dem HT-Partialdruck am Ausgang der Permeationskammer 34 für den primärseitig strömenden Kühlgasstrom zu erreichen, zusätzlich läßt sich in den Bypaß 42 ein Katalysator eingeben, der die gewünschte Reaktion beschleunigt.

Das den Trägergasstrom bildende Kühlgas ist zur Verringerung der Konzentration von HT vor Eintritt in die Permeationskammer 34 alternativ zu vorgenanntem Ausführungsbeispiel auch über einen reduzierbaren Stoff leitbar, beispielsweise CuO.

In der Permeationskammer 34 wird selektiv Tritium entfernt. Der im Gegenstrom zum Kühlgas geführte Trägergasstrom führt somit vom Strömungsraum 40 tritiiertes Wasser ab. Von der Permeationskammer 34 wird der Trägergasstrom zur Gasreingiungskammer 35 geführt und konventionell im gekühltem CuO-Bett gereinigt. Das dabei gebildete Wasser wird zusammen mit dem aus der Permeationskammer 34 mitgeführten Wasser abgeschieden und über eine Kondensatleitung 43 abgeführt. Der auf diese Weise vollständig gereinigte Trägergasstrom kann unmittelbar wieder in den Kühlgaskreislauf eingeleitet werden. Eine an der Gasreinigungskammer 35 angeschlossene Rückführleitung 44 mündet in den Kühlgaskreislauf 32 vor Eintritt des Kühlgases in den Kernreaktor 33.

In einem Kühlgaskreislauf mit Helium bei einem Durchsatz von 74 kg/sec und einem Bypaßfaktor von $3 \cdot 10^{-3}$, der die im Bypaß abströmende Kühlgasmenge bezogen auf die im Kühlgaskreislauf umlaufende Kühlgasmenge angibt, herrschten ohne Einschaltung einer Permeationskammer, wie sie in Figur 3 mit Bezugsziffer 34 angegeben ist, für $H_2$ ein Partialdruck von 50 µbar, für HT ein Partialdruck von 0,01 bis 0,1 µbar. Wird die Permeationskammer eingeschaltet und wird der Partialdruck für $H_2$ im Kühlgaskreislauf unverändert beibehalten, so wird nach Wärmeaustausch in den Reaktorkomponenten 36, 37 bei einem Kühlgasdruck von 40 bar und einer Temperatur von 300° C in der Permeationskammer 34 die Konzentration von HT im Kühlgaskreislauf um den Faktor 250 vermindert. Hierzu ist eine 1 mm starke Austauschwand aus Zirkon mit einer Austauschfläche von ca. 700 $m^2$ erforderlich. Für die Entfernung des Tritiums aus dem Kühlgaskreislauf durch Ionenaustausch in der Permeationskammer 34 werden 11,5 to Wasser pro Jahr benötigt. In der Gasreinigungskammer 35 scheidet sich die gleiche Menge tritiiertes Wasser ab. Die erzielte Verminderung des Tritiumsgehaltes im Kühlgaskreislauf reicht aus, um die infolge von Tritiumpermeation in den Reaktorkomponenten 36, 37 verursachte Anreicherung von Tritium im Sekundärenenergieträger unter der von den Sicherheitsbehörden vorgeschriebenen zulässigen Tritiumskonzentration zu halten.

Im Kühlgaskreislauf nach Figur 3 läßt sich neben der Reinigung des Kühlgasstromes von Tritium auch eine gezielte Steuerung des $H_2$-Partialdrucks durch Hintereinanderschalten zweier Permeationskammern erreichen, wie dies in den Ausführungsbeispielen 1 und 2 ezeigt wurde. Vom Kühlgas werden dann nacheinander zwei Permeationskammern durchströmt, von denen eine die permeierten Wasserstoffisotope durch Zonenaustausch, die andere durch Oxidation in einem vom Trägergas abführbaren Reaktionsprodukt bindet. Auch eine solche Ausgestaltung der Kühlgasreinigung läßt sich mit einer konventionellen Gasreinigungskammer mit gekühltem CuO-Bett verbinden, wobei ein wesentlich günstigerer Reinigungseffekt, als dies bisher bekannt ist erzielbar ist.

Im Ausführungsbeispiel nach Figur 3 ist die Permeationskammer 34 im Kaltgasbereich eingesetzt. Soll eine Belastung der Reaktorkomponenten 36, 37 durch im Reaktorcore entstehendes Tritium vollständig vermieden werden, so lassen sich die Permeationskammern oder mehrere hintereinander geschaltete Permeationskammern auch im Heißgasbereich des Kühlgaskreislaufs zwischen Kernreaktor 33 und Reaktorkomponenten 36, 37 einsetzen. Wegen des geringen Unterdruckes auf der Sekundärseite der Austauschwände gegenüber der Primärseite ist auch im Falle eines Bruches von Austauschwänden Sicherheit gegeben. Denn auf der Sekundärseite entstehendes Wasser kann so an den Bruchstellen nur durch langsame Diffusionsprozesse in den Kühlgaskreislauf eindringen, was für den Fall des Bruches eine Schnellabschaltung des Reaktors nicht erforderlich macht. Besteht die Kernreaktoranlage aus mehreren Kühlgasloops, so können je nach Bedarf in einem Teil der Loops oder in allen Loops Permeationskammern eingesetzt werden, wobei beispielsweise in einigen der Loops Permeationskammern für die Tritiumentfernung durch Isotopenaustausch, in anderen Loops Permeationskammern für die Oxidation der permeierten Wasserstoffisotope angeordnet sind.

Soll die abzutrennende Gesamtmenge der Wasserstoffisotope im Kühlgaskreislauf verändert werden, so ist in den Permeationskammern einerseits die Austauschfläche andererseits die zuzugebene Stoffmenge anzupassen, wobei bei einer Vergrößerung der abzutrennenden Gesamtmenge unter Beibehaltung aller anderen Parameter sowohl die Austauschfläche als auch die Stoffmenge zu vergrößern ist, wie dies anhand der Ausführungsbeispiele für die Wasserstofftrennanlage nach Figuren 1 und 2 beschrieben ist. Um ein mit Wasserstoffisotopen verunreinigtes Inertgas zu reinigen ist es im Umfang der Erfindung selbstverständlich auch möglich, das Inertgas in einem geschlossenen Kreislauf mehrmals durch eine Permeationskammer strömen zu lassen und die Wasserstoffisotope im Inertgasstrom in mehreren Umläufen kontinuierlich abzureichern. Dabei kann beispielsweise die zum Abtrennen der Wasserstoffisotope benötigte Austauschfläche im Verhältnis zum zu reinigenden Inertgasstrom klein gehalten werden.

Mit zunehmendem $H_2$-Partialdruck im Primärgas und bei Anwesenheit von Primärgasverunreinigungen (zum Beispiel CO, $CH_4$, $H_2O$ etc, empfiehlt es sich, um eine Hydrid-Bildung sowie eine Passivierung der Austauschwand zu vermeiden, Pd oder Pd-Ag (etwa 75 % Pd, 25 % Ag, in Form einer Membran oder Folie als Austauschwand einzusetzen.

**Patentansprüche**

1.Verfahren zum Abtrennen von Wasserstoff und/oder Deuterium und Tritium aus einem Inertgasstrom, der mit Wasserstoff und/oder Deuterium und Tritium verunreinigt ist, bei dem das zu reinigende Inertgas primärseitig an einer Austauschwand eine Permeationskammer für Wasserstoffisotope entlanggeführt wird, wobei die Wasserstoffisotope durch die Austauschwand permeieren, und auf der Sekundärseite der Trennwand ein Trägergasstrom zum Abtransport der Wasserstoffisotope strömt und die abzutrennenden Wasserstoffisotope in einem durch die Austauschwand nicht permeationsfähigen, im Trägergasstrom transportablen Reaktionsprodukt durch Zugabe eines reagierten Stoffes gebunden werden,
dadurch gekennzeichnet,
daß sekundärseitig der Austauschwand der innerhalb der Permeationskammer mit den permeierenden Wasserstoffisotopen reagierender Stoff vorhanden ist.

2. Verfahren nach Anspruch 1,
dadurch gekennzeichnet, daß ein Stoff zugegeben wird, der die abzutrennenden Wasserstoffisotope durch Isotopenaustausch bindet.

3. Verfahren nach Anspruch 2,
dadurch gekennzeichnet, daß Wasser bzw. Wasserdampf zugegeben wird.

4. Verfahren nach Anspruch 1,
dadurch gekennzeichnet, daß ein die permeierenden Wasserstoffisotope oxidierender Stoff zugegeben wird.

5. Verfahren nach Anspruch 4,
dadurch gekennzeichnet, daß Sauerstoff zugegeben wird.

6. Verfahren nach Anspruch 4,
dadurch gekennzeichnet, daß ein Metalloxid zugegeben wird.

7. Verfahren nach Anspruch 6,
dadurch gekennzeichnet, daß Kupferoxid oder Eisenoxid zugegeben wird.

8. Verfahren nach einem der vorhergehenden Ansprüche,

dadurch gekennzeichnet, daß der Inertgasstrom auf der Primärseite und Trägergasstrom auf der Sekundärseite der Austauschwand im Gegenstrom geführt werden.

9. Verfahren nach einem der vorhergehenden Ansprüche,
dadurch gekennzeichnet, daß das die Wasserstoffisotope bindende Reaktionsprodukt aus dem Trägergasstrom entfernt und der Trägergasstrom im Kreislauf zur Sekundärseite der Austauschfläche zurückgeführt wird.

10. Verfahren nach Anspruch 9,
dadurch gekennzeichnet, daß das Reaktionsprodukt durch Kondensation aus dem Trägergasstrom entfernt wird.

11. Verfahren nach einem der vorhergehenden Ansprüche,
dadurch gekennzeichnet, daß als Trägergas gereinigtes Inertgas verwendet wird.

12. Verfahren nach Anspruch 11,
dadurch gekennzeichnet, daß ein Teil des von der Primärseite der Austauschfläche abströmenden gereinigten Inertgases abgezogen und nach Zugabe eines mit den Wasserstoffisotopen reagierenden Stoffes als Trägergas zur Sekundärseite der Austauschfläche geführt wird.

13. Verfahren nach Anspruch 12,
dadurch gekennzeichnet, daß der Trägergasstrom nach Zugabe des Stoffes und vor Kontakt mit der Sekundärseite der Austauschfläche über einen die Reaktion zwischen Stoff und Wasserstoffisotopen beschleunigenden Katalysator geführt wird.

14. Verfahren nach Anspruch 11,
dadurch gekennzeichnet, daß der Trägergasstrom vor Kontakt mit der Sekundärseite der Austauschfläche über Metalloxid geführt wird.

15. Verfahren nach einem der vorhergehenden Ansprüche,
dadurch gekennzeichnet, daß der zu reinigende Inertgasstrom nacheinander zwei Permeationskammern durchströmt, wobei auf der Sekundärseite der einen Permeationskammer ein Stoff für den Isotopenaustausch, auf der Sekundärseite der zweiten Permeationskammer ein die Wasserstoffisotope oxidierender Stoff zugegeben wird.

16. Verfahren nach Anspruch 15,
dadurch gekennzeichnet, daß der sekundärseitig jeder Permeationskammer geführte Trägergasstrom die Permeationskammern nacheinander in Gegenrichtung zum zu reinigenden Inertgasstrom durchströmt.

17. Verfahren nach einem der Ansprüche 15 oder 16,
dadurch gekennzeichnet, daß der zu reinigende Inertgasstrom zunächst eine Permeationskammer durchströmt, auf deren Sekundärseite Sauerstoff zugegeben wird, und danach eine Permeationskammer, auf deren Sekundärseite ein Stoff für den Isotopenaustausch eingesetzt wird.

18. Verfahren nach einem der Ansprüche 15 oder 16,
dadurch gekennzeichnet, daß der zu reinigende Inertgasstrom zunächst eine Permeationskammer durchströmt, auf deren Sekundärseite ein Stoff für den Isotopenaustausch zugegeben wird, und danach eine Permeationskammer, auf deren Sekundärseite ein Metalloxid eingesetzt wird.

19. Vorrichtung zur Durchführung des Verfahrens nach einem der Ansprüche 1 bis 18 im Kühlgaskreislauf (32) eines gasgekühlten Kernreaktors, mit einer Gasreinigungsanlage (35), die eine Einrichtung zur Abscheidung von Wasser aufweist, und die über einen Bypaß (42) mit Durchflußregler (42a) am Kühlgaskreislauf (32) angeschlossen ist, wobei am Ausgang der Gasreinigungsanlage (35) eine zum Kühlgaskreislauf geführte Rückführleitung (44) angeschlossen ist,
dadurch gekennzeichnet, daß in den Kühlgaskreislauf (32) wenigstens eine Permeationskammer (1, 2; 16, 17; 34) mit zumindest einer Austauschwand (6, 7; 20, 21; 38) für Wasserstoffisotope eingesetzt ist, wobei primärseitig der Austauschwand (3, 4; 18, 19; 39) ein vom Kühlgas des Kühlgaskreislaufs durchströmter Strömungsraum (1, 2; 20, 21; 38) und sekundärseitig ein Strömungsraum (8, 9; 22, 24; 40) angeordnet ist, in den der am Kühlgaskreislauf (32) in Strömungsrichtung (32a) des Kühlgases gesehen hinter der Permeationskammer (34) angeschlossenen Bypaß (42) mit einer Zufuhrleitung (41) für einen Stoff mündet, der mit durch die Austauschwand permeierenden Wasserstoffisotopen chemisch reagiert, und daß der Bypaß (42) vom Ausgang des sekundärseitigen Strömungsraumes (40) zum Eingang der Gasreinigungsanlage (35) geführt ist.

20. Vorrichtung nach Anspruch 19,
dadurch gekennzeichnet, daß die Zufuhrleitung (41) an eine Wasser- oder Wasserdampfleitung angeschlossen ist.

21. Vorrichtung nach Anspruch 19,
dadurch gekennzeichnet, daß die Zufuhrleitung (41) an eine Sauerstoffleitung angeschlossen ist.

22. Vorrichtung nach Anspruch 19,
dadurch gekennzeichnet, daß im Strömungsraum (24; 40) Metalloxid vorhanden ist.

23. Vorrichtung nach einem der vorhergehenden Ansprüche 19 bis 22,
dadurch gekennzeichnet, daß im Bypaß (27; 42) ein Katalysator zur Verringerung der Wasserstoffkonzentration angeordnet ist.

24. Vorrichtung nach einem der vorhergehenden Ansprüche 19 bis 22,
dadurch gekennzeichnet, daß im Bypaß (27; 42) ein Metalloxid eingesetzt ist.

25. Vorrichtung nach einem der Ansprüche 19 bis 24,
dadurch gekennzeichnet, daß in den Kühlgaskreislauf (32) wenigstens zwei vom Kühlgas nacheinander durchströmte Permeationskammern (1, 2; 16, 17; 34) eingesetzt sind, wobei in den sekundärseitigen

Strömungsraum (9; 22; 40) der einen Permeationskammer (2; 16; 34) ein Stoff für den Isotopenaustausch und in den sekundärseitigen Strömungsraum (8; 24) der anderen Permeationskammer (1; 17) ein die Wasserstoffisotope oxidierender Stoff einleitbar ist.

26. Vorrichtung nach Anspruch 25, dadurch gekennzeichnet, daß im Kühlgaskreislauf in Strömungsrichtung (32a) des Kühlgases gesehen, zunächst eine Permeationskammer (1) angeordnet ist, deren sekundärseitiger Strömungsraum (8) zum Einleiten von Sauerstoff mit einer Sauerstoffleitung (12) verbunden ist, und daß dieser Permeationskammer (1) eine Permeationskammer (2) nachgeschaltet ist, deren sekundärseitiger Strömungsraum (9) mit einer Wasser- oder Wasserdampfleitung (11) in Verbindung steht.

27. Vorrichtung nach Anspruch 25, dadurch gekennzeichnet, daß im Kühlgaskreislauf (32) in Strömungsrichtung des Kühlgases gesehen zunächst eine Permeationskammer (16) angeordnet ist, deren sekundärseitiger Strömungsraum (20) mit einer Wasser- oder Wasserdampfleitung (26) verbindbar ist, und daß dieser Permeationskammer (16) eine Permeationskammer (17) nachgeschaltet ist, deren sekundärseitiger Strömungsraum (24) ein Metalloxid enthält.

**Claims**

1. Process for separating hydrogen and/or deuterium and tritium from a stream of inert gas contaminated with hydrogen and/or deuterium and tritium, wherein the inert gas which is to be purified is conducted at the primary side along an exchange wall of a permeation chamber for hydrogen isotopes, the hydrogen isotopes permeating through the exchange wall, and a stream of carrier gas flows at the secondary side of the partition wall for carrying away the hydrogen isotopes, and the hydrogen isotopes which are to be separated are bound in a reaction product, which is not capable of permeation through the exchange wall and which is transportable in the carrier gas stream, by the addition of a reacting substance, characterised in that the substance reacting within the permeation chamber with the permeating hydrogen isotopes is present at the secondary side of the exchange wall.

2. Process according to claim 1, characterised in that a substance is added which by isotope exchange binds the hydrogen isotopes which are to be separated out.

3. Process according to claim 2, characterised in that water or steam is added.

4. Process according to claim 1, characterised in that a substance oxidising the permeating hydrogen isotopes is added.

5. Process according to claim 4, characterised in that oxygen is added.

6. Process according to claim 4, characterised in that a metallic oxide is added.

7. Process according to claim 6, characterised in that copper oxide or iron oxide is added.

8. Process according to one of the preceding claims, characterised in that the stream of inert gas at the primary side and the stream of carrier gas at the secondary side of the exchange wall are conducted in countercurrent flow relatively to one another.

9. Process according to one of the preceding claims, characterised in that the reaction product binding the hydrogen isotopes is removed from the carrier gas stream, and the carrier gas stream is re-cycled to the secondary side of the exchange wall.

10. Process according to claim 9, characterised in that the reaction product is removed by condensation from the carrier gas stream.

11. Process according to one of the preceding claims, characterised in that purified inert gas is used as the carrier gas.

12. Process according to claim 11, characterised in that a portion of the purified inert gas flowing away from the primary side of the exchange wall is taken off and, after the addition of a substance reacting with the hydrogen isotopes, is conducted as carrier gas to the secondary side of the exchange wall.

13. Process according to claim 12, characterised in that the stream of carrier gas, after the addition of the substance and before contact with the secondary side of the exchange wall, is conducted over a catalyst which accelerates the reaction between the substance and the hydrogen isotopes.

14. Process according to claim 11, characterised in that the stream of carrier gas is passed over metallic oxide before contact with the secondary side of the exchange wall.

15. Process according to one of the preceding claims, characterised in that the stream of inert gas to be purified flows through two permeation chambers one after the other, a substance for isotope exchange is added at the secondary side of one permeation chamber, and a substance oxidising the hydrogen isotopes is added at the secondary side of the second permeation chamber.

16. Process according to claim 15, characterised in that the carrier gas stream conducted at the secondary side of each permeation chamber flows through the permeation chambers one after the other in the direction opposite to the stream of inert gas to be purified.

17. Process according to one of claims 15 or 16, characterised in that the stream of inert gas to be purified flows first through a permeation chamber, at the secondary side of which oxygen is added, and then a permeation chamber at whose secondary side a substance for isotope

exchange is provided.

18. Process according to one of claims 15 or 16, characterised in that the stream of inert gas to be purified flows first through a permeation chamber at whose secondary side a substance for isotope exchange is added, and then a permeation chamber at whose secondary side a metallic oxide is provided.

19. Apparatus for carrying out the process according to one of claims 1 to 18 in the cooling gas circuit (32) of a gas-cooled nuclear reactor, with a gas purification plant (35) which has a device for the separation of water, and which is connected, via a bypass (42) having a throughflow regulator (42a), to the cooling gas circuit (32), a return conduit (44) which extends to the cooling gas circuit being connected to the outlet of the gas purification plant (35), characterised in that at least one permeation chamber (1, 2; 16, 17; 34) having at least one exchange wall (6, 7; 20, 21; 38) for hydrogen isotopes is arranged in the cooling gas circuit (32), wherein at the primary side of the exchange wall (3, 4; 18, 19; 39) there is arranged a flow compartment (1, 2; 20, 21; 38) through which the cooling gas of the cooling gas circuit flows, and at the secondary side a flow compartment (8, 9; 22, 24; 40) into which the bypass (42), connected to the cooling gas circuit (32) downstream of the permeation chamber (34) as viewed in the flow direction (32a) of the cooling gas, debouches with a feed conduit (41) for a substance which reacts chemically with hydrogen isotopes permeating through the exchange wall, and that the bypass (42) extends from the secondary-side flow compartment (40) to the inlet of the gas purification plant (35).

20. Apparatus according to claim 19, characterised in that the feed conduit (41) is connected to a water or steam conduit.

21. Apparatus according to claim 19, characterised in that the feed conduit (41) is connected to an oxygen conduit.

22. Apparatus according to claim 19, characterised in that metallic oxide is present in the flow compartment (24; 40).

23. Apparatus according to one of the preceding claims 19 to 22, characterised in that a catalyst for reducing the hydrogen concentration is arranged in the bypass (27; 42).

24. Apparatus according to one of the preceding claims 19 to 22, characterised in that a metallic oxide is provided in the bypass (27; 42).

25. Apparatus according to one of claims 19 to 24, characterised in that at least two permeation chambers (1, 2; 16, 17; 34) which the cooling gas flows through one after the other are arranged in the cooling gas circuit (32), and a substance for isotope exchange is adapted to be introduced into the secondary-side flow compartment (9; 22; 40) of one permeation chamber (2; 16; 34), and a substance oxidising the hydrogen isotopes is adapted to be introduced into the secondary-side flow compartment (8; 24) of the other permeation chamber (1; 17).

26. Apparatus according to claim 25, characterised in that in the cooling gas circuit, in the cooling gas flow direction (32a), there is first arranged a permeation chamber (1) whose secondary-side flow compartment (8) is connected to an oxygen conduit (12) for the introduction of oxygen, and that downstream of this permeation chamber (1) there is connected a permeation chamber (2) whose secondary-side flow compartment (9) is connected to a water or steam conduit (11).

27. Apparatus according to claim 25, characterised in that in the cooling gas circuit (32) there is arranged first, as viewed in the flow direction of the cooling gas, a permeation chamber (16) whose secondary-side flow compartment (20) is connected to a water or steam conduit (26), and that downstream of this permeation chamber (16) there is connected a permeation chamber (17) whose secondary-side flow compartment (24) contains a metallic oxide.

**Revendications**

1. Procédé pour séparer de l'hydrogène et/ou du deutérium et du tritium d'un courant de gaz inerte, pollué par de l'hydrogène et/ou par du deutérium et par du tritium, qui consiste à faire passer le gaz inerte à purifier du côté primaire le long d'une paroi d'échange d'une chambre de perméation des isotopes de l'hydrogène de sorte que les isotopes de l'hydrogène passent par perméation à travers la paroi d'échange, et à faire passer du côté secondaire de la paroi de séparation un courant de gaz porteur destiné à évacuer les isotopes de l'hydrogène et à fixer, par addition d'une substance réactive, les isotopes de l'hydrogène à séparer en un produit de réaction qui n'est pas susceptible de passer à travers la paroi d'échange par perméation et qui peut être transporté dans le courant de gaz porteur,

caractérisé en ce que la substance réagissant dans la chambre de perméation sur les isotopes de l'hydrogène qui passent par perméation, est présente du côté secondaire de la paroi d'échange.

2. Procédé suivant la revendication 1, caractérisé en ce qu'il consiste à ajouter une substance qui fixe les isotopes de l'hydrogène à séparer par échange isotopique.

3. Procédé suivant la revendication 2, caractérisé en ce qu'il consiste à ajouter de l'eau ou de la vapeur.

4. Procédé suivant la revendication 1, caractérisé en ce qu'il consiste à ajouter une substance oxydant les isotopes de l'hydrogène qui peuvent passer par perméation.

5. Procédé suivant la revendication 4, caractérisé en ce qu'il consiste à ajouter de l'oxygène.

6. Procédé suivant la revendication 4, caractérisé en ce qu'il consiste à ajouter un oxyde métallique.

7. Procédé suivant la revendication 6, caractérisé en ce qu'il consiste à ajouter de l'oxyde de cuivre ou de l'oxyde de fer.

8. Procédé suivant l'une des revendications précédentes, caractérisé en ce qu'il consiste à faire passer à contre-courant le courant de gaz inerte du côte primaire et le courant de gaz porteur du côté secondaire de la paroi d'échange.

9. Procédé suivant l'une des revendications précédentes, caractérisé en ce qu'il consiste à éliminer le produit de réaction fixant les isotopes de l'hydrogène du courant de gaz porteur et à retourner en circuit fermé le courant de gaz porteur au côté secondaire de la surface d'échange.

10. Procédé suivant la revendication 9, caractérisé en ce qu'il consiste à éliminer le produit de réaction du côté de gaz porteur par condensation.

11. Procédé suivant l'une des revendications précédentes, caractérisé en ce qu'il consiste à utiliser comme gaz porteur du gaz inerte purifié.

12. Procédé suivant la revendication 11, caractérisé en ce qu'il consiste à soutirer une partie du gaz inerte purifié s'écoulant du côté primaire de la surface d'échange et, après addition d'une substance réagissant sur les isotopes de l'hydrogène, à l'envoyer à titre de gaz porteur au côté secondaire de la surface d'échange.

13. Procédé suivant la revendication 12, caractérisé en ce qu'il consiste à envoyer le courant de gaz porteur, après addition de la substance et avant contact avec le côté secondaire de la surface d'échange, sur un catalyseur accélérant la réaction entre la substance et les isotopes de l'hydrogène.

14. Procédé suivant la revendication 11, caractérisé en ce qu'il consiste à envoyer le courant de gaz porteur sur un oxyde métallique avant contact avec le côté secondaire de la surface d'échange.

15. Procédé suivant l'une des revendications précédentes, caractérisé en ce qu'il consiste à faire passer le courant de gaz inerte à purifier successivement dans deux chambres de perméation en ajoutant du côté secondaire de la première chambre de perméation une substance pour l'échange isotopique et du côté secondaire de la seconde chambre de perméation une substance oxydant les isotopes de l'hydrogène.

16. Procédé suivant la revendication 15, caractérisé en ce qu'il consiste à faire passer le courant de gaz porteur envoyé du côté secondaire de chaque chambre de perméation successivement dans les chambres de perméation à contre-courant du courant de gaz inerte à purifier.

17. Procédé suivant l'une des revendications 15 ou 16, caractérisé en ce qu'il consiste à faire passer le courant de gaz inerte à purifier d'abord dans une chambre de perméation sur le côté secondaire de laquelle on envoie de l'oxygène et ensuite dans une chambre de perméation sur le côté secondaire de laquelle on introduit une substance pour l'échange isotopique.

18. Procédé suivant l'une des revendications 15 ou 16, caractérisé en ce qu'il consiste à faire passer le courant de gaz inerte à purifier d'abord dans une chambre de perméation sur le côté secondaire de laquelle on envoie une substance pour l'échange isotopique et ensuite dans une chambre de perméation sur le côté secondaire de laquelle on introduit un oxyde métallique.

19. Appareillage pour mettre en oeuvre le procédé suivant l'une des revendications 1 à 18, dans le circuit de refroidissement du gaz (32) d'un réacteur nucléaire refroidi au gaz, comprenant une installation d'épuration des gaz (35) qui comporte un dispositif de séparation de l'eau et qui est raccordée, par une dérivation (42) ayant un dispositif de réglage du débit (42a), au circuit pour le gaz de refroidissement (32), un conduit de retour (44) allant au circuit du gaz de refroidissement étant raccordé à la sortie de la l'installation d'épuration des gaz (35), caractérisé en ce que au moins une chambre de perméation (1, 2; 16, 17; 34), ayant au moins une paroi d'échange (6, 7; 20, 21; 38) pour les isotopes de l'hydrogène, est mise en oeuvre dans le circuit du gaz de refroidissement (32), une chambre de passage (1, 2; 20, 21; 38) parcourue par le gaz de refroidissement du circuit de gaz de refroidissement étant prévue du côté primaire de la paroi d'échange (3, 4; 18, 19; 39), tandis que du côté secondaire est prévue une chambre de passage (8, 9; 22, 24; 40) dans laquelle la dérivation (42) raccordée en aval de la chambre de perméation (34), considérée dans le sens de passage (32a) du gaz de refroidissement, débouche par un conduit d'amenée (41) d'une substance qui réagit chimiquement sur les isotopes de l'hydrogène qui passent par perméation à travers la paroi d'échange et en ce que la dérivation (42) va de la sortie de la chambre de passage (40) du côté secondaire à l'entrée de l'installation d'épuration des gaz (35).

20. Appareillage suivant la revendication 19, caractérisé en ce que le conduit d'amenée (41) est raccordé à un conduit d'eau ou de vapeur d'eau.

21. Appareillage suivant la revendication 19, caractérisé en ce que le conduit d'amenée (41) est raccordé à un conduit d'oxygène.

22. Appareillage suivant la revendication 19, caractérisé en ce que de l'oxyde métallique se trouve dans la chambre de passage (24; 40).

23. Appareillage suivant l'une des revendications précédentes 19 à 22, caractérisé en ce qu'un catalyseur diminuant la concentration d'hydrogène est disposé dans la dérivation (27; 42).

24. Appareillage suivant l'une des revendications précédentes 19 à 22,

caractérisé en ce qu'un oxyde métallique est introduit dans la dérivation (27; 42).

25. Appareillage suivant l'une des revendications 19 à 24,

caractérisé en ce que dans le circuit du gaz de refroidissement (32) sont prévues au moins deux chambres de perméation (1, 2; 16, 17; 34) parcourues successivement par du gaz de refroidissement, une substance pour l'échange isotopique pouvant être introduite dans la chambre de passage (9; 22; 40) de l'une des chambres de perméation (2; 16; 34) et une substance oxydant les isotopes de l'hydrogène pouvant être introduite dans la chambre de passage (8; 24) du côté secondaire de l'autre chambre de perméation (1; 17).

26. Appareillage suivant la revendication 25,

caractérisé en ce que dans le circuit pour le gaz de refroidissement est montée, considérée dans le sens de passage (32a) du gaz de refroidissement, tout d'abord une chambre de perméation (1), dont la chambre de passage (8) du côté secondaire communique avec un conduit pour de l'oxygène (12) en vue de l'introduction d'oxygène et en ce que, en aval de cette chambre de perméation (1), est montée une chambre de perméation (2), dont la chambre de passage (9) du côté secondaire communique avec un conduit (11) pour de l'eau ou pour de la vapeur d'eau.

27. Appareillage suivant la revendication 25,

caractérisé en ce que dans le circuit pour le gaz de refroidissement (32) est montée, considérée dans le sens de passage du gaz de refroidissement, tout d'abord une chambre de perméation (16), dont la chambre de passage (20) du côté secondaire peut communiquer avec un conduit pour de l'eau ou pour de la vapeur d'eau (26) et en ce qu'en aval de cette chambre de perméation (16) est montée une chambre de perméation (17), dont la chambre de passage (24) du côté secondaire contient un oxyde métallique.

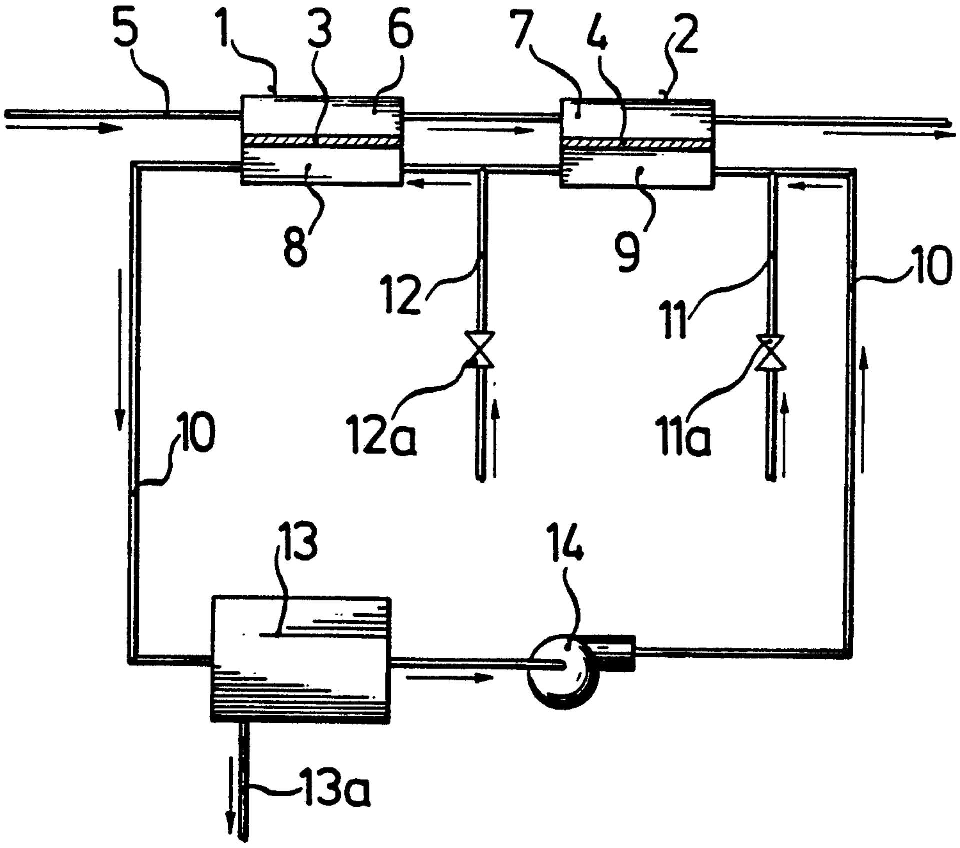


FIG. 1

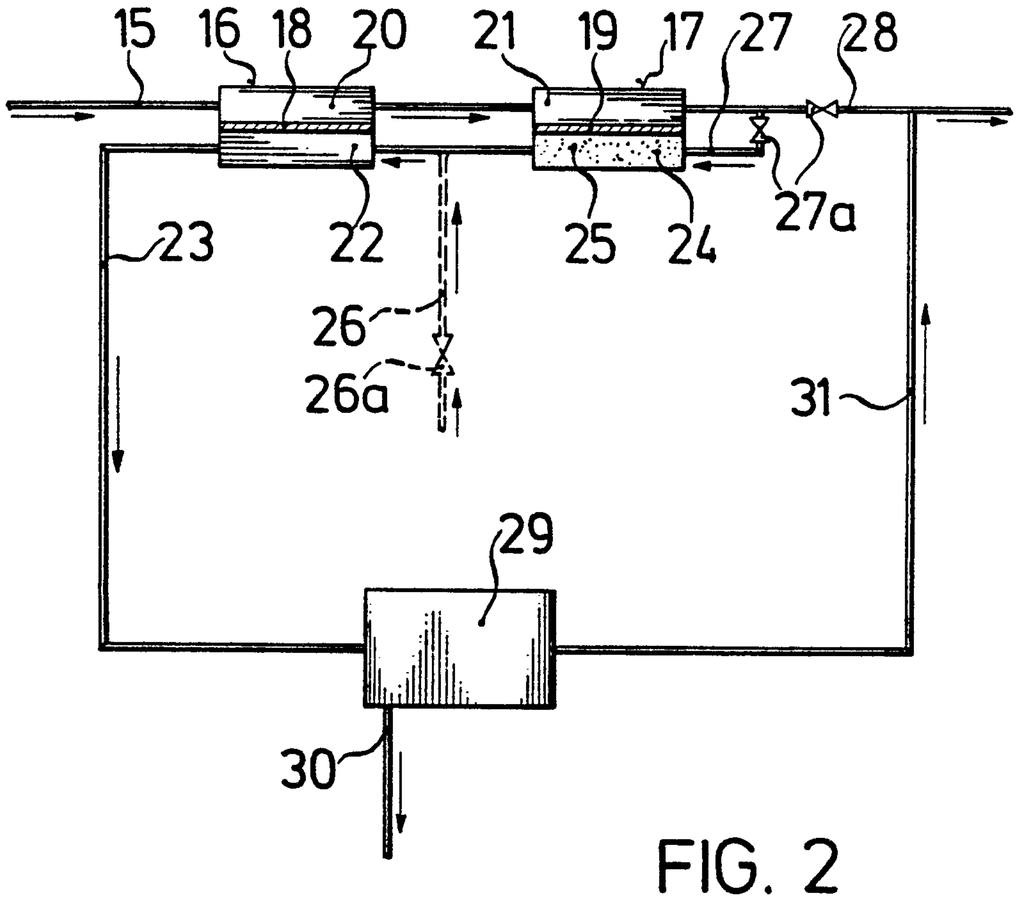


FIG. 2

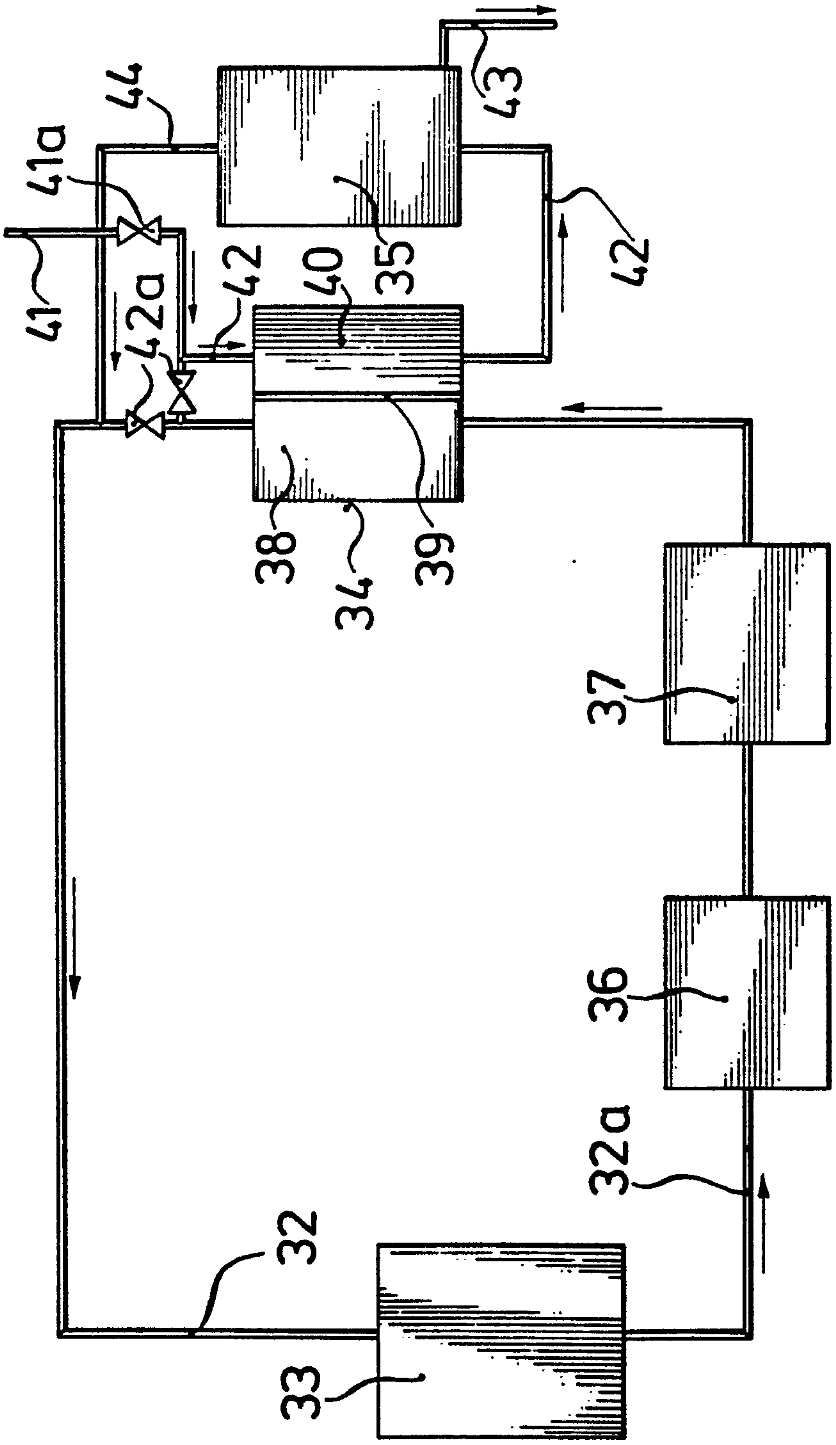


FIG.3